**Europäisches Patentamt**

**European Patent Office**

**Office européen des brevets**

(19)

(11) **EP 1 383 588 B1**

(12) **FASCICULE DE BREVET EUROPEEN**

(45) Date de publication et mention
de la délivrance du brevet:
**06.10.2004 Bulletin 2004/41**

(21) Numéro de dépôt: **02729665.6**

(22) Date de dépôt: **02.05.2002**

(51) Int Cl.⁷: **B01D 33/19**

(86) Numéro de dépôt international:
**PCT/BE2002/000067**

(87) Numéro de publication internationale:
**WO 2002/089953 (14.11.2002 Gazette 2002/46)**

(54) **DISPOSITIF DE FILTRATION CONTINUE AVEC CELLULES PIVOTANTES**

VORRICHTUNG ZUR KONTINUIERLICHEN FILTRATION MIT KIPPBAREN ZELLEN

CONTINUOUS FILTRATION DEVICE WITH PIVOTING CELLS

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **03.05.2001 BE 200100307**

(43) Date de publication de la demande:
**28.01.2004 Bulletin 2004/05**

(73) Titulaire: **Prayon Technologies
4480 Engis (BE)**

(72) Inventeur: **KUROWSKI, Serge
B-4121 Neuville-en-Condroz (BE)**

(74) Mandataire: **Claeys, Pierre et al
Gevers & Vander Haeghen,
Intellectual Property House,
Brussels Airport Business Park
Holidaystraat 5
1831 Diegem (BE)**

(56) Documents cités:
**US-A- 1 028 789**      **US-A- 2 768 753**

## Description

La présente invention est relative à un dispositif de filtration continue de fluide, comprenant

- des cellules de filtration présentant chacune une ouverture vers le haut, par laquelle elles sont alimentées en fluide à filtrer et qui est garnie d'un lit filtrant, qui, en position de filtration des cellules, permet un passage d'un filtrat et une retenue d'un gâteau de filtration, et un fond, ces cellules étant disposées en carrousel autour d'un axe de rotation et agencées chacune de manière à pouvoir pivoter autour d'un axe de basculement, tangentiel à un cercle horizontal ayant pour centre l'axe de rotation,
- des moyens de support des cellules de filtration, qui supportent chaque cellule de manière qu'elle puisse effectuer une révolution autour de l'axe de rotation,
- des moyens d'entraînement des cellules de filtration qui entraînent celles-ci en révolution autour de l'axe de rotation,
- des moyens de déplacement des cellules de filtration qui provoquent un mouvement de basculement de celles-ci autour de leur axe de basculement, pendant leur révolution autour de l'axe de rotation, et
- des moyens d'évacuation du filtrat hors des cellules, comportant au moins un orifice de sortie au fond de chaque cellule, un collecteur central et des moyens de liaison permettant un écoulement pour le filtrat entre ledit au moins un orifice de sortie et le collecteur.

On connaît depuis longtemps déjà des dispositifs de filtration à cellules en carrousel, qui sont en particulier en usage dans la production d'acide phosphorique. On peut citer entre autres les brevets et demandes de brevet US-A-3.389.800, BE-A-768591, BE-A-847088, US-A-4.721.566, WO-90/13348 et WO 92/20426.

Tous ces documents décrivent un procédé de filtration dans lequel les cellules de filtration, de forme trapézoïdale dans une vue en plan, tournent en carrousel autour d'un axe de rotation et sont à un moment donné basculées autour d'un axe radial, pour permettre une évacuation du gâteau de filtration et un lavage de la cellule.

Etant donné ce basculement autour d'un axe radial horizontal, un espacement suffisant entre les cellules voisines doit être prévu pour permettre le basculement précité, sans accrochage entre ces cellules.

Il en résulte une perte de surface filtrante et donc de capacité du dispositif.

On a également déjà prévu un dispositif de filtration du type décrit au début (voir par exemple US-A-1028789). Ce dispositif présente l'inconvénient de nécessiter l'écoulement du filtrat au travers d'un joint tournant, concentrique à l'axe de basculement de la cellule et faisant partie du palier de celle-ci. Un tel joint donne nécessairement lieu à une usure des parties en frottement et il est à prévoir des rentrées d'air dans le circuit sous vide, avec pour effet un refroidissement des filtrats et une cristallisation de ceux-ci dans ce circuit. D'autre part, le mécanisme de basculement de la cellule, compliqué, est situé sous la cellule, c'est-à-dire dans une zone à risque de corrosion où il viendra inévitablement en contact avec les fluides corrosifs alimentés dans les cellules.

On connaît aussi un dispositif de filtration où les cellules en carrousel basculent autour d'un axe tangentiel (voir US-A-2768753). Dans ce dispositif, le collecteur est situé, dans une vue en plan, à l'extérieur des cellules de filtration par rapport à l'axe de rotation et l'orifice de sortie de chaque cellule repose directement sur ce collecteur relié à une source de vide en glissant sur lui. Aucune source de gaz sous pression n'est prévue pour aider au décollage des matières solides et au lavage du lit filtrant en position basculée. Le déchargement des matières solides est obtenu par choc et arrêt du mouvement de basculement sur une butée.

La présente invention a pour but d'éviter ces inconvénients, tout en prévoyant un dispositif relativement simple, moins coûteux, qui demande des efforts nettement diminués pour obtenir une évacuation hors des cellules du gâteau de filtration et leur nettoyage, et qui permette une évacuation sans fuite du filtrat, sans usure exagérée des moyens d'évacuation.

Pour résoudre ces problèmes, il est prévu, suivant l'invention, un dispositif de filtration tel que décrit au début, dans lequel lesdits moyens de liaison de chaque cellule comprennent un conduit flexible, dans lequel, en position de filtration de la cellule, aucune zone du conduit flexible n'est plus basse qu'une autre zone de ce conduit située en aval par rapport à l'écoulement du filtrat, le conduit flexible étant agencé de manière à ne pas subir d'allongement pendant le basculement de la cellule.

Ce dispositif permet de faire basculer les cellules pendant que leurs bords latéraux restent équidistants. On peut donc rapprocher les cellules du centre en réduisant au maximum l'écartement entre elles et, soit augmenter la surface filtrante globale du dispositif pour un même encombrement, soit maintenir celle-ci à la même valeur pour un nettement plus faible encombrement. En outre, par cet agencement, le liquide filtré s'écoule en permanence, sans ralentissement, dans le conduit flexible. Celui-ci ne subit aucun allongement pendant le basculement et, étant donné sa disposition entre l'orifice de sortie d'une cellule et un collecteur disposé centralement, le conduit flexible ne subit pas non plus d'effort à la torsion, pendant le basculement des cellules. La fatigue des moyens de liaison est donc minime.

Suivant une forme de réalisation de l'invention, dans une section radiale passant à travers le dispositif, le conduit flexible dans la position de filtration de la cellule s'étend vers le bas depuis un orifice de sortie suivant un axe sensiblement vertical, puis, à une hauteur inférieure à l'axe de basculement, est coudé en direction du collecteur de manière à présenter continuellement une pente vers le bas, et le conduit flexible dans la position de basculement de la cellule s'étend sensiblement horizontalement depuis l'orifice de sortie jusqu'à l'axe de basculement, puis est coudé en direction du collecteur.

D'une manière avantageuse, l'axe de basculement est supporté dans au moins un palier présentant un premier diamètre externe D1, le conduit flexible présente un deuxième diamètre externe D2 et la distance entre l'axe de basculement et l'axe sensiblement vertical susdit du conduit flexible est égale ou supérieure à 0 et inférieure ou égale à D1 + D2. Cette disposition la plus proche possible entre l'axe de basculement et l'axe vertical du conduit flexible permet d'une manière avantageuse de ne pas soumettre le conduit flexible à un effort d'allongement pendant le basculement.

Suivant une forme de réalisation perfectionnée de l'invention, le dispositif comprend pour chaque conduit flexible un support qui tourne autour de l'axe de rotation simultanément aux cellules de filtration. De cette manière, le support empêche que le conduit flexible, sous son propre poids ou sous son poids lorsque du filtrat s'écoule dedans, n'ait tendance à fléchir vers le bas dans une position où il ne serait plus d'une manière continue en pente vers le bas en direction du collecteur.

Suivant une forme particulière de réalisation de l'invention, le collecteur est relié à une source de dépression que les conduits flexibles reliés aux cellules de filtration en position de filtration communiquent à celles-ci, en dessous de leur lit filtrant, et le collecteur est aussi un distributeur relié à une source de gaz sous pression que les conduits flexibles reliés aux cellules de filtration en position basculée communiquent à celles-ci, pour aider au détachement du gâteau de filtration à partir du lit filtrant.

Suivant une autre forme de réalisation de l'invention, les moyens de déplacement précités comprennent un galet agencé sur chaque cellule de manière à pouvoir tourner librement autour d'un axe de pivotement, et un rail de guidage agencé de manière fixe en un endroit du dispositif de filtration de façon à recevoir le galet de chaque cellule de filtration entraînée, et à le guider de manière à provoquer ledit mouvement de basculement de la cellule.

D'autres formes de réalisation du dispositif suivant l'invention sont indiquées dans les revendications annexées.

D'autres détails et particularités de l'invention ressortiront de la description donnée en annexe, à titre non limitatif, avec référence aux dessins annexés.

La figure 1 représente une vue en plan partiellement brisée d'un dispositif de filtration suivant l'invention.

La figure 2 représente une vue en coupe suivant la ligne II-II de la figure 1.

La figure 3 représente, à échelle agrandie, une vue en plan du rail de guidage suivant la ligne III-III de la figure 2.

La figure 4 représente, à l'échelle agrandie, une vue en coupe du rail de guidage suivant la ligne IV-IV de la figure 2.

La figure 5 représente un détail à l'échelle agrandie de la partie gauche de la figure 2.

La figure 6 représente une vue en coupe suivant la ligne VI-VI de la figure 5.

La figure 7 représente une variante de l'agencement prévu sur la figure 6.

La figure 8 représente une vue en coupe suivant la ligne VIII-VIII de la figure 7.

Ces figures sont des représentations schématiques et, en différents endroits, de nombreux éléments ont été omis pour faciliter leur lecture.

Dans les différentes figures, les éléments identiques ou analogues sont désignés par les mêmes références.

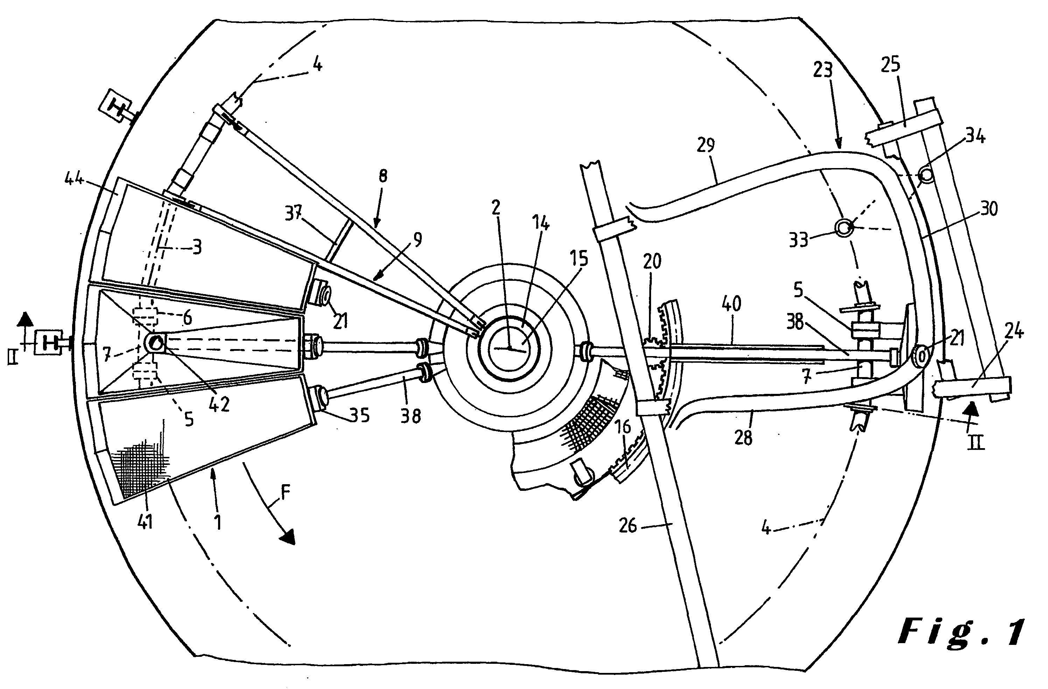

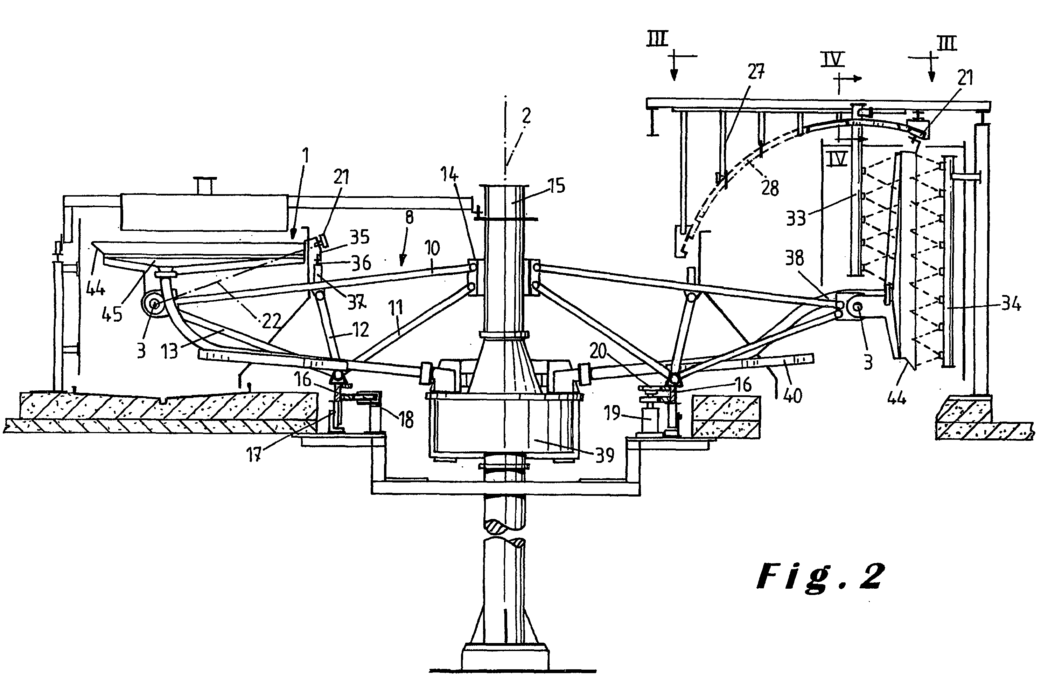

Dans l'exemple de réalisation représenté sur les figures 1 et 2, des cellules de filtration 1 en forme de cuve, présentant une ouverture disposée vers le haut pendant le filtrage, sont agencées en carrousel autour d'un axe de rotation vertical 2. Ces cellules 1 sont garnies d'un lit filtrant 41 horizontal au-dessus duquel est alimenté un fluide à filtrer et en dessous duquel est recueilli un filtrat.

Suivant l'invention, chaque cellule 1 est capable de tourner autour d'un axe de basculement 3 qui est agencé tangentiellement à un cercle horizontal imaginaire 4 dont le centre est formé par l'axe de rotation 2.

Dans l'exemple de réalisation illustré, le fond 45 de chaque cellule 1 est pourvu de deux paliers 5 et 6 à travers lesquels est passé un arbre 7 de manière à permettre un basculement libre de la cellule autour de l'arbre 7. Cet arbre 7 est coaxial à l'axe de basculement 3 précité.

Ainsi qu'il est illustré sur les figures 1 et 2, cet arbre 7 est soutenu par deux tringleries de support 8 et 9, chacune de ces tringleries étant formée de tringles 10 à 13 disposées en triangle. A une extrémité, les tringles 10 et 11 sont fixées à un anneau 14 qui entoure un arbre central 15 de manière à pouvoir tourner librement autour de celui-ci et sans contact avec lui. Cet arbre central 15 est coaxial à l'axe de rotation 2. A son autre extrémité, la tringle 10 est reliée à l'arbre 7 et la tringle 11 à un châssis rotatif circulaire 16 muni d'une crémaillère. La tringle 13 relie l'arbre 7 au châssis circulaire 16 et la tringle 12 relie celui-ci à une partie centrale de la tringle 10. Chaque cellule est ainsi supportée par deux ossatures à la fois légères et indéformables, qui ne subissent que des contraintes de traction et de compression.

Le châssis circulaire 16, agencé coaxialement à l'axe de rotation 2, est soutenu et guidé par des jeux de galets à axe horizontal et respectivement vertical 17 et 18, sur lesquels il peut tourner dans un plan horizontal autour de l'axe de rotation 2. Dans l'exemple illustré, un moteur d'entraînement 19 actionne un pignon denté 20 qui est en prise avec la crémaillère du châssis circulaire 16. Lorsque le moteur est mis en service, il entraîne ainsi l'ensemble de l'installation en rotation dans le sens de la flèche F.

Chaque cellule de filtration est munie d'un galet 21 qui, dans l'exemple illustré, est agencé sur celle-ci du côté face au centre du dispositif. Le galet 21 est agencé de manière à pouvoir tourner librement autour d'un axe de pivotement 22. Cet axe 22 s'étend de préférence radialement entre l'axe de rotation central 2 du dispositif et l'axe de basculement 3 de la cellule correspondante, dans une vue en plan, lorsque la cellule est en position horizontale.

Avantageusement, l'axe de pivotement 22 d'un galet 21 se trouve ainsi dans un plan passant par l'axe de rotation 2 du dispositif et perpendiculaire à l'axe de basculement 3 de la cellule correspondant au galet, et cela pendant tout mouvement de basculement de la cellule.

Dans une partie du dispositif, située à droite sur la figure 1, un rail de guidage 23 est agencé de façon à recevoir le galet 21 de chaque cellule de filtration entraînée.

Dans l'exemple illustré, le rail de guidage 23 est supporté au-dessus des cellules de filtration par deux potences 24 et 25, dont les extrémités vers le centre sont supportées par une traverse 26. Des tiges 27 pourvues chacune d'un étrier de suspension 43 maintiennent de manière fixe le rail de guidage 23 suspendu au-dessus des cellules de filtration. Le rail 23 a une forme de U, dans la vue en plan de la figure 1, et il comporte une partie centrale 30 et deux branches latérales 28 et 29.

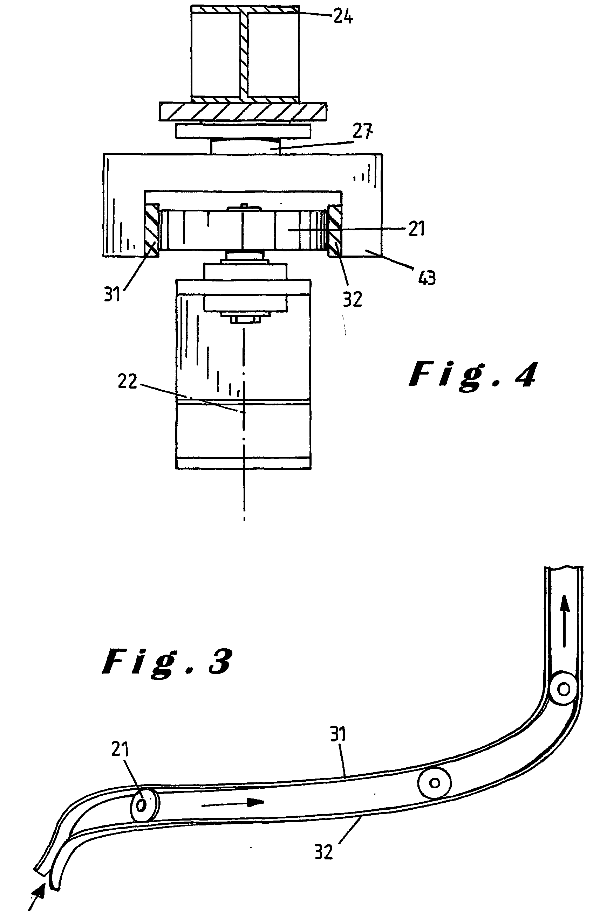

Ce rail de guidage 23 est formé, dans l'exemple illustré, de deux parois latérales 31 et 32 qui s'étendent parallèlement sur tout le parcours du rail. Entre ces deux parois, le galet 21 suit une direction d'avancement illustrée par des flèches sur la figure 3.

Ainsi qu'il est illustré sur les figures 1 et 2, lorsque le galet 21 d'une cellule de filtration atteint la partie centrale 30 du rail de guidage 23, la cellule est en position sensiblement verticale.

Un poste de nettoyage du lit filtrant 41 et du dos de la cellule est prévu dans l'exemple illustré. Il comprend deux lances 33 et 34 qui sont pourvues de tuyères de projection et qui sont alimentées en un liquide de nettoyage. Ces lances projettent ce liquide sur les cellules de filtration en position approximativement verticale, ce qui permet une évacuation des liquides projetés par gravité, dans un récipient collecteur non représenté.

Chaque cellule de filtration est avantageusement munie de moyens d'ajustement de son horizontalité. Ces moyens consistent, dans l'exemple illustré, en une patte 35 s'étendant vers le bas à partir du bord de la cellule disposé face au centre du dispositif. Cette patte est pourvue d'un rebord présentant un trou taraudé dans lequel une tige filetée 36 peut être vissée. Cette tige filetée 36, dont l'extrémité est ainsi ajustable en hauteur, par vissage, vient prendre appui contre une butée 37, qui s'étend, dans le cas illustré, entre les deux tringles 10 des tringleries 8 et 9 de support de la cellule de filtration.

L'alimentation des cellules de filtration en fluide à filtrer s'effectue d'une manière courante par le haut des cellules. Le filtrat est évacué par un orifice 42 situé au fond de chaque cellule. Cet orifice est relié par un conduit souple 38 à un collecteur-distributeur central 39.

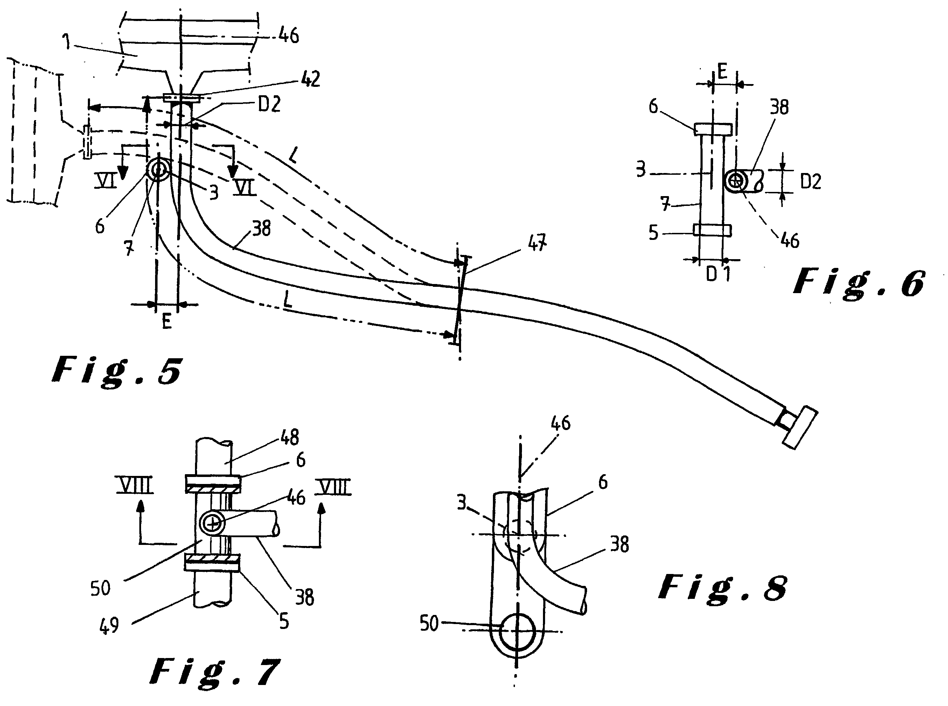

Ainsi qu'il ressort de la figure 5, qui est une vue dans une section radiale à travers le dispositif suivant l'invention, le conduit flexible 38 est représenté en traits pleins en position de filtration de la cellule et en traits interrompus dans sa position basculée. En position de filtration, il s'étend vers le bas suivant un axe sensiblement vertical 46 depuis l'orifice de sortie. Lorsqu'il passe à une hauteur inférieure à l'axe de basculement 3, le conduit flexible 38 est alors coudé en direction du collecteur central 39 de manière à présenter continuellement une pente vers le bas. Afin que, par son poids propre, et par le poids du filtrat qu'il reçoit, le conduit n'ait pas tendance à fléchir vers le bas et à présenter ainsi une position basse défavorable à l'écoulement, dans l'exemple illustré sur la figure 2, chaque conduit flexible 38 est soutenu partiellement par une gouttière 40 qui tourne avec les cellules. Dans l'exemple illustré sur la figure 5, il s'agit plutôt d'un support local 47, soutenant le conduit flexible 38 dans une partie centrale de celui-ci.

La pente du conduit flexible peut être variable, mais elle est partout supérieure à 0°.

Comme on peut le voir sur la figure 5, la longueur L du conduit flexible entre l'orifice de sortie 42 et le support 47 reste constante même lorsque la cellule est en position basculée et que le conduit flexible a été déformé. La partie du conduit flexible 38 entre le support 47 et le collecteur 39 n'est pas déformée et donc ne change pas non plus de longueur.

Dans la position basculée, le conduit flexible s'étend sensiblement horizontalement depuis l'orifice de sortie 42 jusqu'à l'axe de basculement 3, puis il est coudé en direction du collecteur 39.

Ainsi qu'il est indiqué sur les figures 5 et 6, le palier 6 présente un diamètre externe D1 et le conduit flexible un diamètre externe D2. Dans la forme de réalisation illustrée, la distance E entre l'axe de basculement 3 et l'axe sensiblement vertical 46 du conduit est avantageusement de $\frac{D1 + D2}{2}$. Donc, bien que cela ne soit pas critique, et que cette distance E puisse être plus grande, il est préférable qu'elle soit la plus proche possible de 0 et qu'elle soit au maximum égale à D1+D2.

On peut par exemple imaginer une forme de réalisation telle qu'illustrée sur les figures 7 et 8. Là, la cellule pivote autour de bouts d'arbre 48 et 49 coaxiaux entre eux et coaxiaux à l'axe de basculement 3, et les paliers 5 et 6 sont maintenus à distance par un arbre axialement décalé 50 de manière à former une espèce de vilebrequin. L'axe 46 croise maintenant l'axe de basculement 3 et la distance E est égale à 0.

On peut aussi imaginer que l'axe 46 soit, dans une vue en plan, situé davantage vers l'extérieur, par rapport à l'axe de basculement 3.

Le fonctionnement du dispositif illustré est le suivant.

Le moteur 19 entraîne en rotation la crémaillère du châssis circulaire 16 et avec elle chacune des cellules de filtration dans le sens F.

Les cellules sont disposées horizontalement, étroitement côte à côte, et elles sont alimentées en un fluide à filtrer. La filtration du fluide s'effectue au travers du lit filtrant 41, d'une manière courante, sous une dépression, obtenue par des moyens connus en soi.

Le filtrat de chaque cellule est évacué par le conduit souple 38. correspondant, et un gâteau de filtration est formé au-dessus du lit filtrant. Par l'agencement continuellement en pente vers le bas du conduit souple 38, l'évacuation se fait aisément, rapidement, et sans zones où du filtrat pourrait stagner et cristalliser. Toute pièce subissant un frottement et une usure, susceptible de permettre des fuites et des entrées d'air, est évitée. La dépression est communiquée sans perte depuis le collecteur du filtrat 39 jusqu'à la partie basse de chaque cellule en position de filtration.

A un moment, le galet 21 de la cellule rencontre le rail de guidage 23, comme illustré sur la figure 3. Le rail force le galet à monter et donc la cellule à basculer. Son extrémité interne pivote vers le haut autour de l'axe de basculement 3. A peu près à mi-distance de la branche 28 du rail 23, le centre de gravité de la cellule passe à la verticale de l'axe de basculement 3. Au-delà, le poids de la cellule coopère à son entraînement jusqu'à ce qu'elle parvienne à la partie centrale 30. De même pendant le parcours sur la branche 29 du rail de guidage, dès que le centre de gravité de la cellule passe à nouveau à la verticale de l'axe de basculement 3, le poids de la cellule participe à l'entraînement de celle-ci.

Lorsque le galet 21 suit le parcours de la partie centrale du rail de guidage 23, la cellule est en position quasiment verticale et donc aussi le lit filtrant.

Pendant ce basculement, le conduit flexible 38 passe de la position représentée en traits pleins sur la figure 5 à celle représentée en traits interrompus. S'il y a une déformation de courbure du conduit flexible 38 vers le haut, on ne peut observer aucun allongement de celui-ci, ni aucune torsion autour de son axe longitudinal. La fatigue est donc réduite au minimum.

Le gâteau de filtration tombe tout d'abord sur la paroi externe 44 fortement inclinée de la cellule, puis dans un collecteur non représenté, et la cellule passe au travers du poste de nettoyage déjà décrit, avant de basculer à nouveau dans la position horizontale et de recommencer le cycle de filtration.

On peut avantageusement prévoir, par des moyens connus en soi, l'établissement d'une légère contre-pression d'air à l'intérieur de chaque cellule pendant que celle-ci est en position basculée à la verticale, pour aider à l'évacuation du gâteau de filtration. Cette contre-pression peut être alimentée depuis le collecteur 39, qui sert alors de distributeur, au fond de la cellule, par l'intermédiaire du conduit flexible 38.

**Revendications**

1. Dispositif de filtration continue de fluide, comprenant

   - des cellules de filtration (1) présentant chacune une ouverture vers le haut, par laquelle elles sont alimentées en fluide à filtrer et qui est garnie d'un lit filtrant (41), qui, en position de filtration des cellules, permet un passage d'un filtrat et une retenue d'un gâteau de filtration, et un fond (45), ces cellules étant disposées en carrousel autour d'un axe de rotation (2) et agencées chacune de manière à pouvoir pivoter autour d'un axe de basculement (3), tangentiel à un cercle horizontal (4) ayant pour centre l'axe de rotation (2),
   - des moyens de support (8, 9) des cellules de filtration, qui supportent chaque cellule de manière qu'elle puisse effectuer une révolution autour de l'axe de rotation (2),
   - des moyens d'entraînement (16, 19, 20) des cellules de filtration qui entraînent celles-ci en révolution autour de l'axe de rotation (2),
   - des moyens de déplacement (21, 23) des cellules de filtration qui provoquent un mouvement de basculement de celles-ci autour de leur axe de basculement (3), pendant leur révolution autour de l'axe de rotation, et
   - des moyens d'évacuation du filtrat hors des cellules (1), comportant au moins un orifice de sortie (42) au fond de chaque cellule, un collecteur central (39) et des moyens de liaison permettant un écoulement pour le filtrat entre ledit au moins un orifice de sortie (42) et le collecteur (39),

   **caractérisé en ce que** lesdits moyens de liaison de chaque cellule comprennent un conduit flexible (38), dans lequel, en position de filtration de la cellule, aucune zone du conduit flexible (38) n'est plus basse qu'une autre zone de ce conduit située en aval par rapport à l'écoulement du filtrat, le conduit flexible (38) étant agencé de manière à ne pas subir d'allongement pendant le basculement de la cellule.

2. Dispositif suivant la revendication 1, **caractérisé en ce que**, dans une section radiale passant à travers le dispositif, le conduit flexible (38) dans la position de filtration de la cellule s'étend vers le bas depuis un orifice de sortie (42) suivant un axe sensiblement vertical (46), puis, à une hauteur inférieure à l'axe de basculement (3) est coudé en direction du collecteur (39) de manière à présenter continuellement une pente vers le bas, et **en ce que** le conduit flexible (38) dans la position de basculement de la cellule s'étend sensiblement horizontalement depuis l'orifice de sortie (42) jusqu'à l'axe de basculement (3), puis est coudé en direction du collecteur (39).

3. Dispositif suivant la revendication 2, **caractérisé en ce que** l'axe de basculement (3) est supporté dans au moins un palier (5, 6) présentant un premier diamètre externe (D1), **en ce que** le conduit flexible (38) présente un deuxième diamètre externe (D2) et **en ce que** la distance (E) entre l'axe de basculement (3) et l'axe sensiblement vertical (46) susdit du conduit flexible (38) est égale ou supérieure à 0 et inférieure ou égale à D1+D2.

4. Dispositif suivant l'une ou l'autre des revendications 2 et 3, **caractérisé en ce que** l'axe sensiblement vertical (46) susdit est, dans ladite section radiale, situé entre l'axe de basculement (3) et l'axe de rotation (2).

5. Dispositif suivant l'une des revendications 1 à 4, **caractérisé en ce que** chaque cellule est supportée sur un arbre (7) coaxial à l'axe de basculement (3), de manière à pouvoir pivoter autour de cet axe.

6. Dispositif suivant l'une des revendications 1 à 4, **caractérisé en ce que** chaque cellule est supportée sur deux bouts d'arbre (48, 49) coaxiaux entre eux et coaxiaux à l'axe de basculement (3), de manière à pouvoir pivoter autour de cet axe.

7. Dispositif suivant l'une quelconque des revendications 1 à 6, **caractérisé en ce qu'**il comprend un support (40, 47) pour chaque conduit flexible (38) qui tourne autour de l'axe de rotation (2) simultanément aux cellules de filtration (1).

8. Dispositif suivant l'une quelconque des revendications 1 à 7, **caractérisé en ce que** le collecteur (39) est relié à une source de dépression que les conduits flexibles (38) reliés aux cellules de filtration (1) en position de filtration communiquent à celles-ci, en dessous de leur lit filtrant (41), et **en ce que** le collecteur (39) est aussi un distributeur relié à une source de gaz sous pression que les conduits flexibles (38) reliés aux cellules de filtration (1) en position basculée communiquent à celles-ci, pour aider au détachement du gâteau de filtration à partir du lit filtrant.

9. Dispositif suivant l'une des revendications 1 à 8, **ca-**

**ractérisé en ce que** les moyens de déplacement précités comprennent

- un galet (21) agencé sur chaque cellule de manière à pouvoir tourner librement autour d'un axe de pivotement (22), et
- un rail de guidage (23) agencé de manière fixe en un endroit du dispositif de filtration de façon à recevoir le galet (21) de chaque cellule de filtration entraînée, et à le guider de manière à provoquer ledit mouvement de basculement de la cellule.

10. Dispositif suivant la revendication 9, **caractérisé en ce que** l'axe de pivotement (22) de chaque galet (21) se trouve dans un plan passant par l'axe de rotation (2) du dispositif et perpendiculaire à l'axe de basculement (3) de la cellule de filtration correspondant au galet.

11. Dispositif suivant la revendication 10, **caractérisé en ce que** le galet (21) est porté par la cellule (1) à une extrémité interne de celle-ci.

12. Dispositif suivant l'une des revendications 9 à 11, **caractérisé en ce que** le rail de guidage (23) est disposé au-dessus des cellules de filtration de manière à former un U dans une vue en plan, comprenant une partie centrale (30) et deux branches latérales (28, 29), la surface de filtration de la cellule étant en position approximativement verticale lorsque le galet (21) atteint la partie centrale (30) du U.

**Patentansprüche**

1. Vorrichtung zur kontinuierlichen Filtration von Fluid, die aufweist:

- Filtrationszellen (1), die jeweils eine Öffnung nach oben, durch die sie mit zu filterndem Fluid gespeist werden und die mit einem Filterbett (41) ausgestattet ist, das, in Filtrationsstellung der Zellen, einen Durchgang eines Filtrats und ein Halten eines Filterkuchens ermöglicht und einen Boden (45) aufweisen, wobei diese Zellen in Karusselform um eine Rotationsachse (2) angeordnet und jeweils so angebracht sind, dass sie um eine Kippachse (3) schwenken können, die tangential zu einem horizontalen Kreis (4) verläuft, dessen Mitte die Rotationsachse (2) ist,
- Mittel zum Stützen (8, 9) der Filtrationszellen, die jede Zelle so stützen, dass sie eine Drehung um die Rotationsachse (2) durchführen kann,
- Mittel zum Antreiben (16, 19, 20) der Filtrationszellen, die diese in Drehung um die Rotationsachse (2) bringen,

- Mittel zum Verschieben (21, 23) der Filtrationszellen, die eine Kippbewegung von diesen um ihre Kippachse (3) erzeugen, während ihrer Drehung um die Rotationsachse, und
- Mittel zum Ablassen des Filtrats aus den Zellen (1), die wenigstens eine Austrittsöffnung (42) am Boden jeder Zelle, einen zentralen Sammelbehälter (39) und Verbindungsmittel, die dem Filtrat ein Abfließen zwischen wenigstens einer Austrittsöffnung (42) und dem Sammelbehälter (39) ermöglichen, aufweisen,

**dadurch gekennzeichnet, dass** die Verbindungsmittel jeder Zelle eine flexible Leitung (38) aufweisen, in der, in Filtrationsstellung der Zelle, kein Bereich der flexiblen Leitung (38) tiefer gelegen ist als ein anderer Bereich dieser Leitung, der bezüglich des Abfließens des Filtrats stromabwärts liegt, wobei die flexible Leitung (38) so angeordnet ist, dass sie keine Dehnung während des Kippens der Zelle erfährt.

2. Vorrichtung nach Anspruch 1, **dadurch gekennzeichnet, dass** in einem die Vorrichtung durchquerenden radialen Abschnitt, die flexible Leitung (38), in der Filtrationsstellung der Zelle, sich nach unten erstreckt von einer Austrittsöffnung (42) entlang einer im Wesentlichen vertikalen Achse (46), dann, in einer Höhe unterhalb der Kippachse (3), in Richtung des Sammelbehälters (39) gekrümmt ist, derart, dass sie kontinuierlich eine Neigung nach unten aufweist, und dass die flexible Leitung (38) in der Kippstellung der Zelle sich im Wesentlichen horizontal von der Austrittsöffnung (42) bis zur Kippachse (3) erstreckt und dann in Richtung des Sammelbehälters (39) gekrümmt ist.

3. Vorrichtung nach Anspruch 2, **dadurch gekennzeichnet, dass** die Kippachse (3) in wenigstens einem Lager (5, 6) gestützt ist, das einen ersten äußeren Durchmesser (D1) aufweist, und dass die flexible Leitung (38) einen zweiten äußeren Durchmesser (D2) aufweist, und dass der Abstand (E) zwischen der Kippachse (3) und der oben genannten im Wesentlichen vertikalen Achse (46) der flexiblen Leitung (38) gleich oder größer 0 und kleiner oder gleich D1+D2 ist.

4. Vorrichtung nach einem der Ansprüche 2 oder 3, **dadurch gekennzeichnet, dass** die oben genannte im Wesentlichen vertikale Achse (46), in dem radialen Abschnitt, zwischen der Kippachse (3) und der Drehachse (2) liegt.

5. Vorrichtung nach einem der Ansprüche 1 bis 4, **dadurch gekennzeichnet, dass** jede Zelle auf einer koaxial zur Kippachse (3) verlaufenden Achse (7) gestützt wird, derart, dass sie um diese Achse schwenken kann.

6. Vorrichtung nach einem der Ansprüche 1 bis 4, **dadurch gekennzeichnet, dass** jede Zelle auf zwei Achseenden (48, 49) gestützt ist, die zueinander koaxial und koaxial zur Kippachse (3) verlaufen, derart dass sie um diese Achse schwenken kann.

7. Vorrichtung nach einem der Ansprüche 1 bis 6, **dadurch gekennzeichnet, dass** sie einer. Träger (40, 47) für jede flexible Leitung (38) aufweist, der sich gleichzeitig mit den Filtrationszellen (1) um die Drehachse (2) dreht.

8. Vorrichtung nach einem der Ansprüche 1 bis 7, **dadurch gekennzeichnet, dass** der Sammelbehälter (39) mit einer Unterdruckquelle verbunden ist, dass die flexiblen Leitungen (38), die mit den Filtrationszellen (1) in Filtrationsstellung verbunden sind, mit diesen in Verbindung stehen, unterhalb ihres Filterbettes (41), und dass der Sammelbehälter (39) auch ein mit einer Druckgasquelle von Gas unter Druck verbundener Verteiler ist, dass die flexiblen Leitungen (38), die mit den Filtrationszellen (1) in gekippter Stellung verbunden sind, mit diesen in Verbindung stehen, um das Lösen des Filterkuchens aus dem Filterbett zu unterstützen.

9. Vorrichtung nach einem der Ansprüche 1 bis 8, **dadurch gekennzeichnet, dass** die oben genannten Mittel zum Verschieben aufweisen:

- eine Rolle (21), die auf jeder Zelle so angeordnet ist, dass sie sich frei um eine Schwenkachse (22) drehen kann, und
- eine Führungsschiene (23), die fest an einer Stelle der Filtrationsvorrichtung angeordnet ist, so dass sie die Rolle (21) jeder angetriebenen Filtrationszelle aufnehmen kann und diese so führen kann, dass die Kippbewegung der Zelle erfolgt.

10. Vorrichtung nach Anspruch 9, **dadurch gekennzeichnet, dass** die Schwenkachse (22) jeder Rolle (21) sich in einer Ebene befindet, die durch die Rotationsachse (2) der Vorrichtung und senkrecht zur Kippachse (3) der Filtrationszelle verläuft, die der Rolle entspricht.

11. Vorrichtung nach Anspruch 10, **dadurch gekennzeichnet, dass** die Rolle (21) von der Zelle (1) an einem inneren Ende von dieser getragen wird.

12. Vorrichtung nach einem der Ansprüche 9 bis 11, **dadurch gekennzeichnet, dass** die Führungsschiene (23) oberhalb der Filtrationszellen angeordnet ist, derart dass sich in der Draufsicht ein U ergibt, das ein Mittelteil (30) und zwei Seitenarme (28, 29) aufweist, wobei die Filtrationsfläche der Zelle in einer fast vertikalen Stellung ist, wenn die Rolle (21) den zentralen Mittelteil (30) des U erreicht.

**Claims**

1. Continuous fluid filtration device, comprising

   - filtration cells (1) each having an opening towards the top, through which they are supplied with fluid to be filtered and which is fitted with a filter bed (41) which, in the filtration position of the cells, allows passage of a filtrate and retention of a filtration cake, and a bottom (45), these cells being disposed in a carousel around a rotation axis (2) and each arranged so as to be able to pivot about a tilt axis (3), tangential to a horizontal circle (4) having the rotation axis (2) as its centre,
   - means (8, 9) of supporting the filtration cells, which support each cell so that it can perform a revolution about the rotation axis (2),
   - means (16, 19, 20) of driving the filtration cells which drive them in revolution about the rotation axis (2),
   - means (21, 23) of moving the filtration cells which cause a tilting movement thereof about their tilt axis (3), during their revolution about the rotation axis, and
   - means of discharging the filtrate from the cells (1), comprising at least one outlet orifice (42) at the bottom of each cell, a central collector (39) and connection means allowing flow of the filtrate between the said at least one outlet orifice (42) and the collector (39),

   **characterised in that** the said connection means for each cell comprise a flexible conduit (38), in which, in the filtration position of the cell, no area of the flexible conduit (38) is lower than another area of this conduit situated downstream with respect to the flow of the filtrate, the flexible conduit (38) being arranged so as not to undergo any elongation during the tilting of the cell.

2. Device according to Claim 1, **characterised in that**, in a radial section passing through the device, the flexible conduit (38) in the filtration position of the cell extends downwards from an outlet orifice (42) along a substantially vertical axis (46) and then, at a height lower than the tilt axis (3), is angled in the direction of the collector (39) so as to continuously have a downward slope, and **in that** the flexible conduit (38) in the tilting position of the cell extends substantially horizontally from the outlet orifice (42) as far as the tilt axis (3), and is then angled in the direction of the collector (39).

3. Device according to Claim 2, **characterised in that** the tilt axis (3) is supported in at least one bearing (5, 6) having a first outside diameter (D1), **in that** the flexible conduit (38) has a second outside diameter (D2) and **in that** the distance (E) between the tilt axis (3) and the above mentioned substantially vertical axis (46) of the flexible conduit (38) is equal to or greater than 0 and less than or equal to D1 + D2.

4. Device according to one or other of Claims 2 and 3, **characterised in that** the above mentioned substantially vertical axis (46) is, in the said radial section, situated between the tilt axis (3) and the rotation axis (2).

5. Device according to one of Claims 1 to 4, **characterised in that** each cell is supported on a shaft (7) coaxial with the tilt axis (3), so as to be able to pivot about this axis.

6. Device according to one of Claims 1 to 4, **characterised in that** each cell is supported on two shaft ends (48, 49) coaxial with each other and coaxial with the tilt axis (3), so as to be able to pivot about this axis.

7. Device according to any one of Claims 1 to 6, **characterised in that** it comprises a support (40, 47) for each flexible conduit (38) which turns about the rotation axis (2) simultaneously with the filtration cells (1).

8. Device according to any one of Claims 1 to 7, **characterised in that** the collector (39) is connected to a source of negative pressure which the flexible conduits (38) connected to the filtration cells (1) in the filtration position communicate to them, below their filter bed (41), and **in that** the collector (39) is also a distributor connected to a source of pressurised gas which the flexible conduits (38) connected to the filtration cells (1) in the tilted position communicate to them, in order to assist with the detachment of the filtration cake from the filter bed.

9. Device according to one of Claims 1 to 8, **characterised in that** the aforementioned movement means comprise

   - a roller (21) arranged on each cell so as to be able to turn freely about a pivot axis (22), and
   - a guide rail (23) arranged fixedly at one point on the filtration device so as to receive the roller (21) of each driven filtration cell and to guide it so as to cause the said tilting movement of the cell.

10. Device according to Claim 9, **characterised in that** the pivot axis (22) of each roller (21) is situated in a plane passing through the rotation axis (2) of the device and perpendicular to the tilt axis (3) of the filtration cell corresponding to the roller.

11. Device according to Claim 10, **characterised in that** the roller (21) is carried by the cell (1) at an internal end thereof.

12. Device according to one of Claims 9 to 11, **characterised in that** the guide rail (23) is disposed above the filtration cells so as to form a U in a plan view, comprising a central part (30) and two lateral branches (28, 29), the filtration surface of the cell being in an approximately vertical position when the roller (21) reaches the central part (30) of the U.

**Fig. 1**

Fig. 2

24

27

21

43

31

32

*Fig.4*

22

*Fig.3*

31

21

32

Fig. 5

Fig. 6

Fig. 7

Fig. 8